# EUROPEAN PATENT APPLICATION

(11) **EP 3 255 569 A1**
(43) Date of publication of application: **13.12.2017**
(21) Application number: 17170981.9
(22) Date of filing: 15.05.2017
(51) Int. Cl.: G06F 17/30

(54) **ADDRESS INFORMATION MANAGEMENT SYSTEM AND ADDRESS INFORMATION MANAGEMENT PROGRAM**

(30) Priority: 08.06.2016 JP 2016114888
(71) Applicant: Kabushiki Kaisha Toshiba, Minato-ku Tokyo 105-8001 (JP)
(72) Inventor: OHKAWA, Yasuhiro, Minato-ku, Tokyo 105-8001 (JP); MAEDA, Masaya, Minato-ku, Tokyo 105-8001 (JP); HAMAMURA, Tomoyuki, Minato-ku, Tokyo 105-8001 (JP); IRIE, Bunpei, Minato-ku, Tokyo 105-8001 (JP)
(74) Representative: Horn Kleimann Waitzhofer Patentanwälte PartG mbB

(57) **Abstract**

An address information management system includes: a recognizing portion (22) configured to recognize address information including a plurality of pieces of specific information provided on a delivery object (P), based on an image obtained by a photography portion (14) for photographing the delivery object (P); an address specifying portion (24) configured to use the address information recognized by the recognizing portion (22) to search an address database (DB) in which an address information list is registered, the address database including information associating official names of the specific information and aliases of the specific information, and specify the address information provided on the delivery object (P) based on information obtained through the search; a deriving portion (28) configured to derive the number of times that the aliases appeared or a frequency of appearance of the aliases based on specifying results obtained by the address specifying portion (24); and an updating portion configured to update the information associating the official names in the specific information with the aliases of the address database (DB) based on the number of times that the aliases appeared or the frequency of appearance thereof derived by the deriving portion (28).

## Description

### CROSS-REFERENCE TO RELATED APPLICATION

This application is based upon and claims the benefit of priority from Japanese Patent Application No. 2016-114888, filed on June 8, 2016; the entire contents of which are incorporated herein by reference.

### FIELD

Embodiments described herein relate generally to address information management systems and address information management programs.

### BACKGROUND

Conventionally, apparatuses are known that estimate an address similar to acquired address information by changing part of a character string included in the acquired address information, and register address information indicating the estimated address to an address database. In such apparatuses, because estimated addresses are registered in the address database, also address information that is not frequently used remains registered in the database in some cases.

### BRIEF DESCRIPTION OF THE DRAWINGS

FIG. 1 is a schematic diagram of a delivery processing system 1;
FIG. 2 is a diagram illustrating a functional configuration of a delivery processing apparatus 20 and other peripheral portions;
FIG. 3 is a flowchart depicting a flow of processing executed by the delivery processing apparatus 20;
FIG. 4 is a diagram showing an exemplary image that is photographed by a photography portion 14 and includes a delivery object P;
FIG. 5 is a conceptual diagram of an alias-including address database DB;
FIG. 6 is a diagram showing an exemplary count table TB;
FIG. 7 is a diagram showing an exemplary image indicating the result of processing performed by a totaling portion 30;
FIG. 8 is a diagram showing an exemplary image IM that is displayed on a display;
FIG. 9 is a diagram showing a configuration of a delivery processing system 1A according to a third embodiment;
FIG. 10 is a diagram that mainly shows functions of the delivery processing system 1A according to the third embodiment;
FIG. 11 is a sequence chart showing a flow of processing executed by the delivery processing system 1A;
FIG. 12 is a diagram showing an exemplary image that is displayed on a management side display 58;
FIG. 13 is a diagram showing another exemplary image that a central management apparatus 50 causes the management side display 58 to display;
FIG. 14 is a diagram showing a functional configuration of a delivery processing system 1B according to a fourth embodiment;
FIG. 15 is a flowchart showing a flow of processing executed by a delivery processing apparatus 20B;
FIG. 16 is a diagram showing an exemplary alias candidate table TB1;
FIG. 17 is a diagram showing an exemplary image IM2 indicating the result of processing performed by the totaling portion 30;
FIG. 18 is a diagram showing an exemplary image IM3 that is displayed on a display 8; and
FIG. 19 is a diagram showing a configuration of a delivery processing system 1C according to a fifth embodiment.

### DETAILED DESCRIPTION

An address information management system according to the embodiments includes a recognizing portion, an address specifying portion, a deriving portion, and an updating portion. The recognizing portion recognizes address information including a plurality of pieces of specific information that are provided on a delivery object, based on an image obtained by a photography portion for photographing the delivery object. The address specifying portion uses the address information recognized by the recognizing portion to search an address database in which an address information list is registered, the address database including information associating official names of the specific information with aliases of the specific information. The address specifying portion then specifies the address information provided on the delivery object based on information obtained through the search. The deriving portion derives the number of times that the aliases appeared or the frequency of appearance of the aliases based on the specifying result obtained by the address specifying portion. The updating portion updates the information associating the official names of the specific information with the aliases of the address database based on the number of times that the aliases appeared or the frequency of appearance of the aliases derived by the deriving portion.

Hereinafter, an address information management system and an address information management program according to the embodiments will be described with reference to the drawings.

### First Embodiment

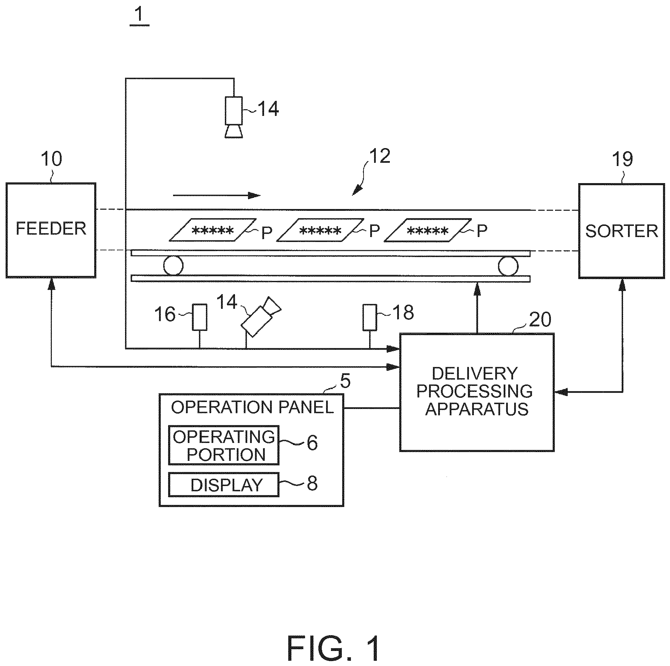

FIG. 1 is a schematic diagram of a delivery processing system 1. The delivery processing system 1 is a system for sorting out delivery objects P, which include delivery parcels, postcards, envelops, and the like, into sorting areas corresponding to respective delivery destinations. In the delivery processing system 1, delivery objects P, which are conveyed by a conveyance structure 12, are photographed by a photography portion 14, the conveying structure 12 including a belt conveyer, a holding belt, and the like, for example. The delivery processing system 1 recognizes address information provided on each delivery object P in the image obtained by the photography portion 14, and sorts out the delivery object P based on the recognized address information. The address information is information that indicates a delivery address of each delivery object P. The address information may include an address in the narrow sense, as well as a name of a person or place, or the like.

The delivery processing system 1 includes, for example, an operation panel 5, a feeder 10, a conveying structure 12, a photography portion 14, a barcode reader (hereinafter referred to as "BCR") 16, a barcode writer (hereinafter referred to as "BCW") 18, a sorter 19, and a delivery processing apparatus 20.

The operation panel 5 includes an operating portion 6 and a display 8. The operating portion 6 is a device for accepting a user operation to input information. The operating portion 6 includes an input device such as a keyboard, a mouse, a touch panel, or a microphone. The display 8 displays operation status of the delivery processing system 1, the processing result, or the like. The display 8 is a display device such as an LCD (Liquid Crystal Display) or an organic EL (Electro Luminescence) display.

The feeder 10 is provided on the upstream side of the conveying structure 12. Delivery objects P to be conveyed to the conveying structure 12 are set in the feeder 10. The delivery objects P are set in a stacked state, for example, in the feeder 10. The feeder 10 includes a roller (not shown), which comes into contact with the lower end of the set delivery objects P. As a result of the roller rotating with the delivery objects P set in the feeder 10, the delivery objects P are taken out of the feeder 10 and are fed to the conveying structure 12.

The conveying structure 12 conveys, toward the sorter 19, the delivery objects P fed from the feeder 10. The conveying structure 12 includes a conveyance belt, a drive pulley, and a drive motor, for example. The drive pulley is rotated by driving force that is output as a result of the drive motor being driven. The conveyance belt operates using rotational force of the drive pulley to convey the delivery objects P placed on the belt.

The photography portion 14 photographs each delivery object P that has arrived at a photographing position, and outputs the obtained image to the delivery processing apparatus 20. The photography portion 14 includes, for example, a lighting device and a plurality of scanners of a line-scanning type capable of photographing a moving delivery object P with high resolution. Line images are acquired by the scanners of a line-scanning type. For example, an image processor included in the photography portion 14 generates a two-dimensional image by combining the line images in a short direction of these line images. The lighting device emits light toward the delivery objects P conveyed by the conveying structure 12. For example, by arranging the plurality of scanners at positions at which the scanners can photograph each delivery object P from different angles, the photography portion 14 can acquire line images that correspond to respective faces of the delivery object P. Note that the photography portion 14 may be a camera capable of individually photographing predetermined flat-surface areas, or may be a video camera, for example. The image processor that generates the two-dimensional image may be included in the delivery processing apparatus 20.

The BCR 16 reads out information from a barcode that is provided on each delivery object P, and outputs the read information to the delivery processing apparatus 20. The information read out by the BCR 16 includes identification information, address information, and the like of the delivery object P. Although the BCR 16 in this example reads out information from a barcode, the BCR 16 may read out information not only from a barcode but also from code information, such as a QR code (registered trademark).

The BCW 18 prints a barcode on each delivery object P based on an instruction from the delivery processing apparatus 20. The barcode may be printed with ink that is hard to see for people, for example. The BCW 18 prints a barcode in which the address information, which is the recognition result, is encoded on a delivery object P whose address information was recognized by the delivery processing apparatus 20, for example. The BCW 18 also prints a barcode in which identification information is encoded on a delivery object P whose address could not completely recognized. The delivery processing apparatus 20 retains a correspondence relationship between the result obtained by a video coding system (hereinafter referred to as "VCS") and the identification information. The VCS is a system for displaying, on a display of the VCS, an image of any delivery object P whose address information could not recognized by the delivery processing apparatus 20, and assists in recognizing the address information using visual recognition by a person. The details of the VCS will be described in the fourth embodiment.

The sorter 19 is provided on the downstream side of the conveying structure 12. The sorter 19 includes, for example, a plurality of steps, a plurality of sorting pockets (not shown) that are partitioned into a plurality of lines, and a VCS pocket (not shown). Based on an instruction from the delivery processing apparatus 20, the sorter 19 conveys each delivery object P into a sorting pocket that corresponds to the sorting destination in accordance with the instruction to accumulate the delivery object P in the sorting pocket. Delivery objects P that have been subjected to video coding are accumulated in the VCS pocket. The delivery objects P accumulated in the VCS pocket are then returned to the feeder 10. In this case, the sorting pocket to which each delivery object P is to be conveyed is determined based on the barcode printed by the aforementioned BCW 18 and the result of processing performed by the VCS. Delivery objects P that have been conveyed to the sorter 19 once may be subjected not only to off-line video coding, which is processing to perform video coding, but also to online video coding. Online video coding refers to performing video coding on a delivery object P that is being conveyed to the sorter 19. In this case, based on the result of online video coding processing, the delivery processing system 1 sorts a delivery object P that was subjected to online video coding into a sorting pocket, similarly to other delivery objects P.

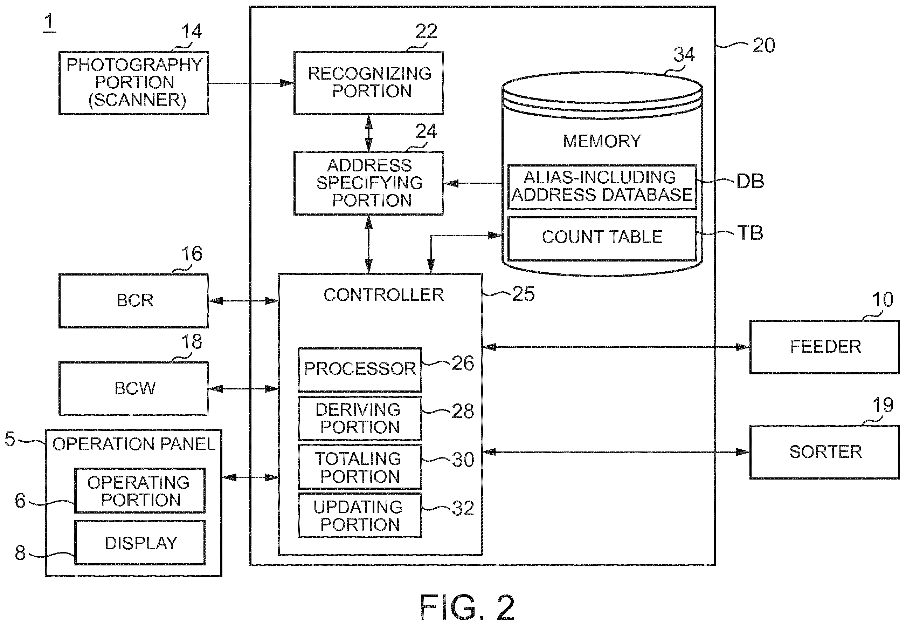

FIG. 2 is a diagram illustrating a functional configuration of the delivery processing apparatus 20 and other peripheral portions. The delivery processing apparatus 20 includes an OCR portion 22 (recognizing portion), an address specifying portion 24, a controller 25, and a memory 34. Some or all of the OCR portion 22, the address specifying portion 24, and the controller 25 may be realized as a result of a processor such as a CPU (Central Processing Unit) executing a program. Also, some or all of those functional portions may be realized by hardware such as an LSI (Large Scale Integration) chip, an ASIC (Application Specific Integrated Circuit), or an FPGA (Field-Programmable Gate Array). The memory 34 is realized by a storage device such as a RAM (Random Access Memory), a ROM (Read Only Memory), an HDD (Hard Disk Drive), or a flash memory.

The OCR portion 22 has a function of performing OCR (Optical Character Recognition) processing. The OCR portion 22 recognizes address information that is provided on each delivery object P, and includes one or more pieces of specific information based on the image obtained by the photography portion 14. Note that the details of the specific information will be described later. The following description will assume that the address information includes a plurality of pieces of specific information.

Using the address information recognized by the OCR portion 22, the address specifying portion 24 searches an alias-including address database DB in which an address information list is registered. The alias-including address database DB includes information associating official names of the specific information and aliases. The address specifying portion 24 thus specifies the address information provided on each delivery object P based on the information obtained through the search. The address specifying portion 24 outputs the result of recognition processing performed on the address information to the controller 25. The alias-including address database DB is an example of an address database.

The controller 25 includes a processor 26, a deriving portion 28, a totaling portion 30, and an updating portion 32. The processor 26 performs various kinds of control on respective portions of the delivery processing apparatus 20. The processor 26 sorts out the delivery objects P by controlling the sorter 19 based on the result of image recognition performed by the address specifying portion 24, for example. The processor 26 controls the BCR 16 to cause the BCR 16 to read out information that is encoded in the barcode printed on each delivery object P. The processor 26 controls the BCW 18 to cause the BCW 18 to print a barcode on each delivery object P in accordance with the result of image recognition performed by the address specifying portion 24, for example. The processor 26 controls the display 8 to cause the display 8 to display a desired image.

The deriving portion 28 derives the number of times that an alias in the specific information was recognized or the frequency of appearance of the alias, based on the specifying result obtained by the address specifying portion 24. The number of times that the specific information was recognized refers to the number of times that the specific information was recognized by the address specifying portion 24 based on the result of OCR processing. The frequency of appearance of an alias refers to the frequency at which the specific information was recognized by the address specifying portion 24 relative to the number of times of OCR processing, for example.

The totaling portion 30 totals, every predetermined period (year, month, week etc.), the number of times that an alias in the specific information was recognized or the frequency of appearance of the alias derived by the deriving portion 28. The totaling portion 30 may also total, based on set conditions, the number of times that an alias was recognized or the frequency of appearance of the alias derived by the deriving portion 28. Conditions include an area, language, and the like included in the address information, for example.

The updating portion 32 updates the information associating official names of specific information and aliases of the alias-including address database DB based on the number of times that the aliases of the specific were recognized or the frequency of appearance of the aliases. The update may be performed at any time.

A dictionary for recognizing characters, the alias-including address database Db, a count table TB, and the like are stored in the memory 34. The details of the alias-including address database DB will be described later.

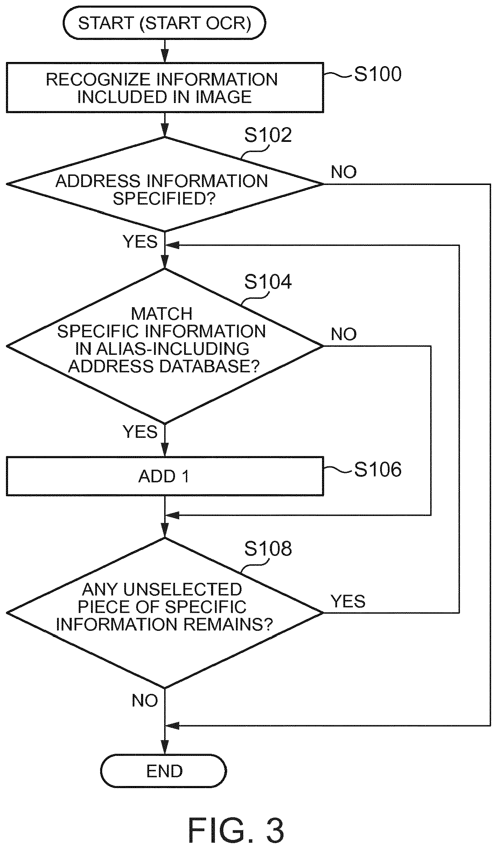

FIG. 3 is a flowchart showing a flow of processing executed by the delivery processing apparatus 20. This processing is started when the address specifying portion 24 has acquired an image obtained by the photography portion 14, for example.

Initially, the address specifying portion 24 recognizes information included in an image obtained by the photography portion 14 (step S100). Next, the address specifying portion 24 determines, based on the result of processing in step S100, whether or not the delivery address information has been specified (step S102). If the address information cannot be specified, the processing of this flowchart ends. If the delivery address information has been specified, the processing proceeds to step S104.

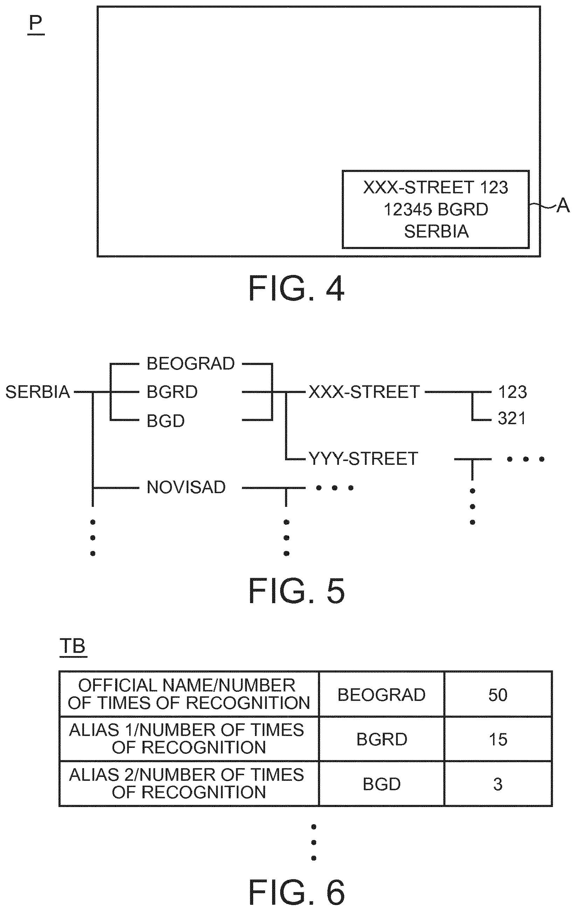

FIG. 4 is a diagram showing an exemplary image that is obtained by the photography portion 14 and includes a delivery object P. The address specifying portion 24 cuts out an area A that includes the address information in the image obtained by the photography portion 14 and including the delivery objects P. The address specifying portion 24 recognizes the address information included in the area A that was cuts out above. The address specifying portion 24 searches for address information stored in the alias-including address database DB (hereinafter referred to as "stored address information"), and specifies delivery address information that matches the recognized address information. For example, if the stored address information matches the recognized address information to a predetermined degree or more, and there is no other address information that matches the recognized address information to the predetermined degree or more as stored address information, the address specifying portion 24 specifies the recognized address information as the stored address information that matches the recognized address information to a predetermined degree or more. Cases where stored address information matches the recognized address information to a predetermined degree or more include the case where part of the recognized address information (some characters) is lacking, and the case where some characters or the like in the recognized address information are different from the stored address information, for example.

FIG. 5 is a conceptual diagram of the alias-including address database DB. The address information includes a plurality of pieces of specific information for specifying an address. The specific information is layered (hierarchical). In the shown example, the address information includes a first (hierarchy) layer (e.g. country), a second layer (e.g. city, ward, town, or village), a third layer (e.g. region smaller than city, ward, town, or village), and a fourth layer (e.g. house number). The address information may also include a layer indicating a prefecture, for example.

In the shown example, the address information includes "SERBIA" as specific information in the first layer, "BEOGRAD", "BGRD", "BGD", "NOVISAD", and so on, as specific information in the second layer, "XXX-STREET" and "YYY-STREET" as specific information in the third layer, and "123" and "321" as specific information in the fourth layer. In the shown example, "BEOGRAD" "BGRD", and "BGD" indicate the same specific information. "BEOGRAD", which is the specific information in the second layer, is an official name in the specific information, and "BGRD" and "BGD" are aliases of the specific information of the aforementioned official name. An association between the official name of the specific information and the aliases of the specific information is stored in advance in the alias-including address database DB. When the operating portion 6 is operated by an operator, the official name of the specific information and the alias of the specific information may be associated.

For example, if, in the processing in step S100, "SERBIA BGRD XXX-STREET 123" is recognized as the address information as shown in FIG. 5, the recognized address information matches the stored address information, and the address specifying portion 24 accordingly determines that the address information has been specified. For example, if the recognized address information includes an alias of the specific information, the address specifying portion 24 replaces the alias of the specific information with the official name of the specific information that is associated therewith to specify this alias of the specific information. That is to say, in the processing in step S100, the address specifying portion 24 replaces "SERBIA BGRD XXX-STREET 123" with "SERBIA BEOGRAD XXX-STREET 123" to specify the address information.

If the address information has been specified, the address specifying portion 24 determines whether the specific information included in the recognized address information matches the specific information in the address information included in the alias-including address database DB (step S104). The aforementioned address information included in the alias-including address database DB refers to the address information specified in step S102 (hereinafter, "specified address information"). The specified address information includes an official name of the specific information and aliases of the specific information. For example, the address specifying portion 24 segments the information included in the recognized address information, and recognizes the plurality of pieces of specific information. For example, the address specifying portion 24 selects one piece of specific information in the address information included in the area A. The address specifying portion 24 determines whether the selected piece of specific information matches an alias in the specific information included in the specified address information.

If the specific information included in the address information does not match the specific information in the specified address information, the processing proceeds to step S108. If the specific information included in the address information matches the specific information in the specified address information, the deriving portion 28 in the controller 25 adds 1 to the count table TB in the memory 34 (step S106).

FIG. 6 is a diagram showing an exemplary count table TB. In the count table TB, an official name of the specific information is associated with aliases of the specific information. Also, in the count table TB, the numbers of times that the official name of the specific information and the respective aliases of the specific information were recognized by the address specifying portion 24 (number of times that the official name and the aliases appeared) are associated with the official name in the specific information and the aliases of the specific information, respectively. Note that, in the count table TB, the frequencies of appearance of the official name of the specific information and the respective aliases of the specific information may be associated with the official name in the specific information and the aliases of the specific information, respectively. The frequency of appearance is the ratio of the number of times that each alias in the specific information was recognized by the address specifying portion 24 to the number of times that the address specifying portion 24 processed the address information, or a frequency derived by, for example, statistically processing the number of times that each alias in the specific information was recognized by the address specifying portion 24. If "SERBIA BGRD XXX-STREET 123" is recognized as shown in FIG. 4, the deriving portion 28 adds 1 to the count value corresponding to "BGRD", namely 15.

Next, the address specifying portion 24 determines whether any unselected piece of specific information (that has not subjected to the processing in step S104) remains (step S108). If any unselected piece of specific information remains, the processing returns to step S104. If no unselected piece of specific information remains, the processing of this flowchart ends.

Note that this processing has been described while taking processing performed on delivery address information as an example, but similar processing may also be performed in the case of processing sender address information.

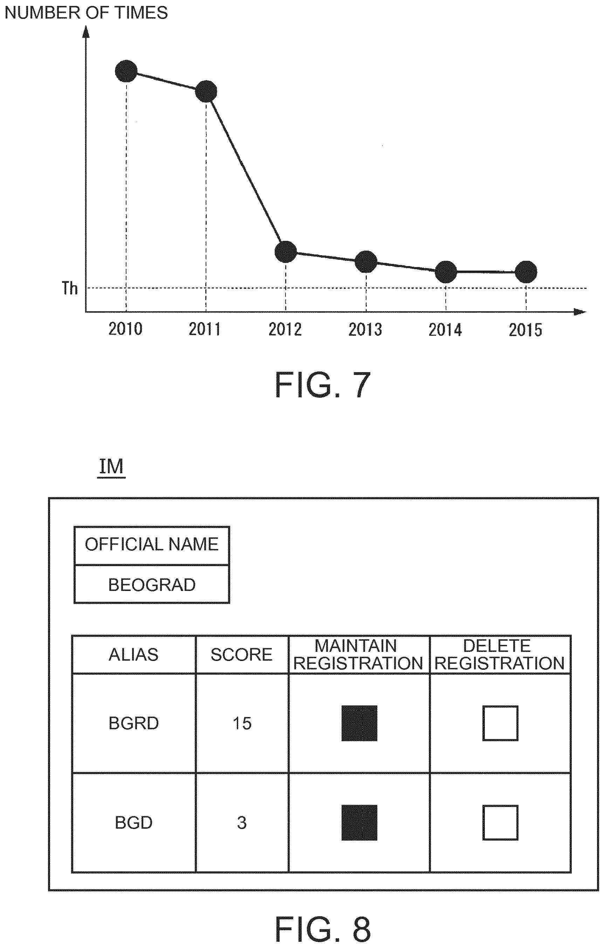

FIG. 7 is a diagram showing an exemplary image indicating the result of processing performed by the totaling portion 30. The totaling portion 30 derives the number of times that certain specific information was recognized in a predetermined period. The shown example indicates the totaling result that is derived based on the number of times that the alias "BGRD" in the specific information was recognized every year (e.g. from year 2010 to year 2015). The updating portion 32 determines whether to maintain the registration of the alias in the specific information based on the totaling result obtained by the totaling portion 30. For example, if the number of times that the alias in the specific information was recognized exceeds a predetermined threshold value Th, the updating portion 32 maintains the registration of this alias in the specific information. For example, if the number of times that the alias in the specific information was recognized is smaller than or equal to the predetermined threshold value, the updating portion 32 deletes the registration of this alias in the specific information. To delete means to delete target specific information registered in the alias-including address database DB, for example. Instead of deleting, the updating portion 32 may cancel the association between the target specific information and the official name of the specific information that is registered in the alias-including address database DB, for example.

If the score of the official name in the specific information is smaller than or equal to the predetermined threshold value Th, the official name in the specific information may be deleted from the address database DB, or may remain registered rather than being deleted. For example, the criteria for determining whether to delete or maintain the registration of the official name in the specific information when the score of the official name in the specific information is smaller than or equal to the predetermined threshold value Th is preset in the delivery processing apparatus 20. For example, the determination criteria may be preset in the delivery processing apparatus 20 so as to delete the official name in the specific information if, due to a change in the social situation or the like, the number of times that the official name in the specific information is used has decreased, whereas the number of times that an alias in the specific information is used has increased.

The updating portion 32 may derive the score based on the number of times that the alias in the specific information was counted by the deriving portion 28, or the totaling result obtained by the totaling portion 30. The score refers to a value derived by statistically processing the number of times of recognition or the frequency of appearance. The updating portion 32 sets a larger score for an alias in the specific information that was counted a greater number of times by the deriving portion 28, for example. The updating portion 32 may also derive a ratio between the number of times that the official name of the specific information was counted and the number of times that an alias in the specific information was counted, and derive the score using the derivation result. The updating portion 32 may derive the score based on the amount of increase in the number of times that an alias in the specific information was counted within a past fixed period. In this case, the greater the amount of increase is, the higher the derived score is.

The updating portion 32 may delete an alias in the specific information whose score is lower than or equal to a predetermined value, or may delete n aliases of the specific information from the alias having the lowest score (n is a natural number). Alternatively, the updating portion 32 may maintain the registration of n aliases of the specific information from the alias having the highest score, the n aliases having a score that is higher than or equal to the predetermined value. The aforementioned predetermined value may be the same or different for official names of the specific information with which aliases of the specific information are associated.

For example, in the case where an alias in the specific information that has been used a small number of times is registered in the alias-including address database DB, if the address specifying portion 24 compares the specific information that has been used a small number of times with the specific information recognized by the OCR portion 22, the time required to specify the address information may increase in some cases. Also, in the case where an alias in the specific information that has been used a small number of times is registered, a storage device with larger capacity needs to be provided, which may increase costs of the apparatus in some cases. In contrast, according to this embodiment, aliases of the specific information that have been used a large number of times are kept registered in the alias-including address database DB, and aliases of the specific information that have been used a small number of times are deleted from the alias-including database to adjust the number of pieces of address information. As a result, an increase in the time required to specify the address information is suppressed. Further, because it is not necessary to provide a storage device with large capacity, the costs of the apparatus can be kept low.

According to the above-described first embodiment, the updating portion 32 determines whether to maintain the registration of an alias in the specific information, or whether to delete a registered alias in the specific information, based on the number of times that the alias in the specific information appeared or the frequency of appearance thereof. Thus, the number of pieces of address information can be managed so as to be within an appropriate range.

### Second Embodiment

The second embodiment will now be described below. The delivery processing apparatus 20 according to the second embodiment determines whether to maintain or delete the registration of an alias in the specific information based on an operation performed by an operator. The following description will focus on differences from the first embodiment.

A processor 26 causes the display 8 to display an image that includes information indicating the totaling result obtained by the totaling portion 30 and whether to maintain the registration of specific information. FIG. 8 is a diagram showing an exemplary image IM that is displayed on the display 8. In the image IM, an area is displayed that includes information regarding an inquiry about whether to maintain or delete the registration of "BGRD" and "BGD", which are aliases of the specific information associated with the official name "BEOGRAD" in the specific information. Also, in the image IM, an area is displayed in which scores corresponding to the aliases of the specific information are associated with the respective aliases of the specific information.

For example, if, as a result of referencing the scores, the operator determines that the registration of an alias in the specific information is to be maintained, the operator operates the operating portion 6 to make an input operation to maintain the registration. For example, if, as a result of referencing the scores, the operator determines that the registration of an alias is to be deleted rather than to be maintained, the operator operates the operating portion 6 to make an input operation to delete the registered alias in the specific information. The input operation may be an operation made to a mouse or the like. If the display 8 is of a touch panel type, the input operation may be a touch operation made to the display 8.

The updating portion 32 acquires a signal corresponding to the input operation executed by the operator, and maintains or deletes the registration of an alias in the specific information based on the acquired signal. In the example in FIG. 8, the input operation to maintain the registration of the aliases of the specific information has been performed by the operator. Accordingly, the updating portion 32 maintains the registration of the aliases of the specific information.

Note that the processor 26 may cause the display 8 to display aliases of the specific information in the descending order of the score of the aliases of the specific information. Also, the processor 26 may cause the display 8 to display n aliases of the specific information having a high score, or may cause the display 8 to display aliases of the specific information having a score that is higher than or equal to a predetermined value. The processor 26 may also cause the display 8 to display n aliases of the specific information having a score that is higher than or equal to the predetermined value in the descending order of the score. The aforementioned predetermined value may be the same or different for official names in the specific information with which aliases of the specific information are associated. Alternatively, the processor 26 may cause the display 8 to display aliases of the specific information having a score that is lower than the predetermined value.

According to the above-described second embodiment, the updating portion 32 determines whether to maintain or delete the registration of aliases of the specific information in accordance with an input operation performed by the operator. Thus, the number of pieces of address information can be managed so as to be within a more appropriate range.

### Third Embodiment

The third embodiment will now be described below. In the first embodiment, the updating portion 32 in the delivery processing apparatus 20 determines whether to maintain the registration of an alias in the specific information. In the third embodiment, a central management apparatus 50, which communicates with the delivery processing apparatus 20, determines whether to maintain the registration of an alias in the specific information. The following description will focus on differences from the first embodiment.

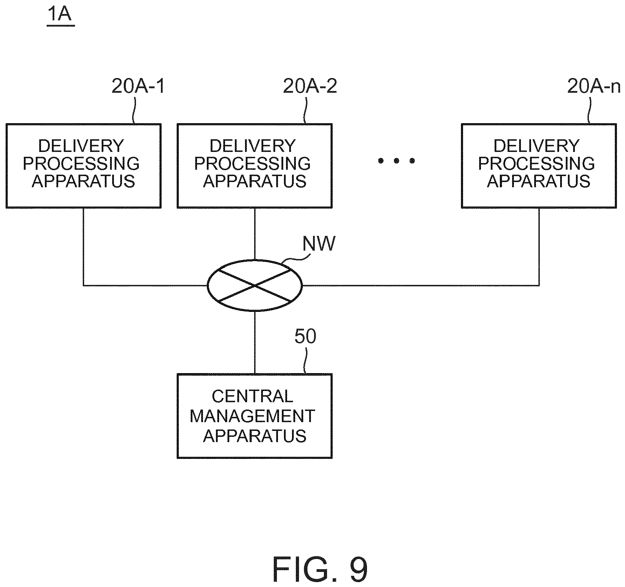

FIG. 9 is a diagram showing a configuration of a delivery processing system 1A according to the third embodiment. The delivery processing system 1A (first apparatus) includes delivery processing apparatuses 20A-1 to 20A-n (n is a natural number) and a central management apparatus 50 (another apparatus, or second apparatus). In the following description, in the case of not distinguishing among the delivery processing apparatuses 20A-1 to 20A-n, these delivery processing apparatuses will be simply referred to as a delivery processing apparatus 20A.

The delivery processing apparatus 20A and the central management apparatus 50 are connected to a network NW and communicate with each other. The network NW is a LAN (Local Area Network), a WAN (Wide Area Network), or the like, for example.

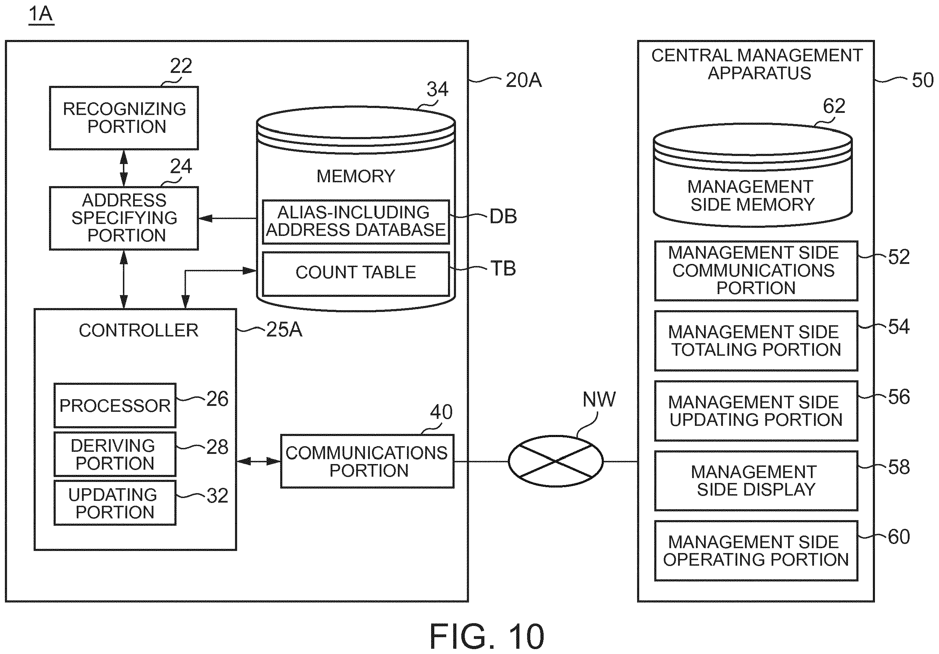

FIG. 10 is a diagram that mainly shows functions of the delivery processing system 1A according to the third embodiment. A description will be given of differences between the delivery processing apparatus 20A according to the third embodiment and the delivery processing apparatus 20 according to the first embodiment. The delivery processing apparatus 20A according to the third embodiment includes a controller 25A in place of the controller 25 in the delivery processing apparatus 20. The controller 25A includes the processor 26, the deriving portion 28, and the updating portion 32. The totaling portion 30 is omitted.

The delivery processing apparatus 20A also includes a communications portion 40. The communications portion 40 is a communication interface for connection to the network NW.

The central management apparatus 50 includes a management side communications portion 52, a management side totaling portion 54, a management side updating portion 56, a management side display 58, a management side operating portion 60, and a management side memory 62. The management side communications portion 52 is a communication interface for connection to the network NW.

The management side totaling portion 54 performs predetermined totaling processing based on the number of times that an alias in the specific information acquired from the delivery processing apparatus 20A was recognized, or the frequency of appearance thereof. The management side updating portion 56 updates an association between an official name in the specific information and an alias in the specific information in the alias-including address database DB based on the number of times that the alias of the specific information was recognized or the frequency of its appearance as derived from the totaling result obtained by the management side totaling portion 54. The management side display 58 has a functional configuration equivalent to that of the above-described display 8. The management side operating portion 60 has a functional configuration equivalent to that of the above-described operating portion 6. Accordingly, a description of the management side display 58 and the management side operating portion 60 will be omitted. Information transmitted from the delivery processing apparatus 20A is stored in the management side memory 62.

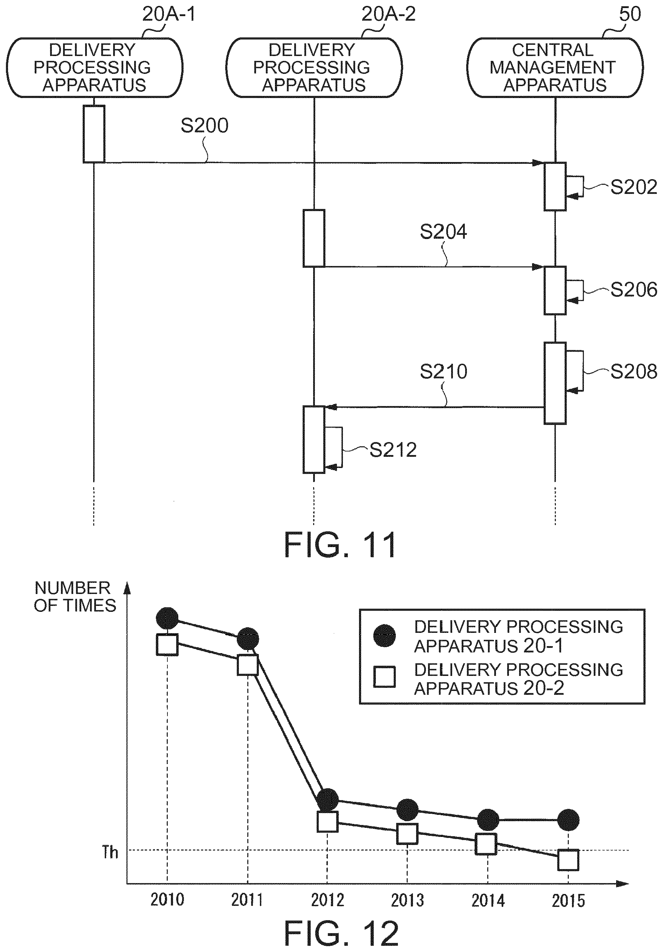

FIG. 11 is a sequence chart showing a flow of processing executed by the delivery processing system 1A. In this processing, processing executed by the delivery processing apparatus 20A-1, the delivery processing apparatus 20A-2, and the central management apparatus 50 will be described as an example. For example, this processing is started every predetermined period.

Initially, the delivery processing apparatus 20A-1 transmits the counting result obtained by the deriving portion 28 provided therein to the central management apparatus 50 (step S200). Next, the central management apparatus 50 acquires the counting result transmitted from the delivery processing apparatus 20A-1, and stores the acquired result in the management side memory 62 (step S202).

Next, the delivery processing apparatus 20A-2 transmits the counting result obtained by the deriving portion 28 provided therein to the central management apparatus 50 (step S204). Next, the central management apparatus 50 acquires the counting result transmitted from the delivery processing apparatus 20A-2, and stores the acquired result in the management side memory 62 (step S206). The counting results stored in the management side memory 62 are totaled by the management side totaling portion 54.

Next, the management side updating portion 56 in the central management apparatus 50 determines, based on the totaling result, an alias in the specific information whose registration is to be deleted (step S208). The management side updating portion 56 transmits, to the delivery processing apparatus 20A, information indicating the alias in the specific information that is to be deleted (step S210). Note that the central management apparatus 50 may transmit the alias in the specific information to be deleted not only to the delivery processing apparatus 20A-2 but to any delivery processing apparatus 20A.

Next, the updating portion 32 in the delivery processing apparatus 20A, upon acquiring, from the central management apparatus 50, the information regarding the alias in the specific information to be deleted, deletes the aforementioned alias in the specific information to be deleted from the alias-including address database DB in the delivery processing apparatus 20A (step S212). Thus, the processing of this flowchart ends.

In this processing, the counting result obtained by the counters 28 in each delivery processing apparatus 20A is transmitted to the central management apparatus 50. However, the result of totaling the counting results may be transmitted to the central management apparatus 50. In this case, the delivery processing apparatus 20A includes the totaling portion 30 described in the first embodiment.

FIG. 12 is a diagram showing an exemplary image that is displayed on the management side display 58. The central management apparatus 50 causes the management side display 58 to display the number of times that a predetermined alias in the specific information was recognized, or the frequency of appearance thereof. The shown example indicates the number of times that certain specific information was recognized every year (e.g. from year 2010 to year 2015) by the delivery processing apparatuses 20A-1 and 20A-2.

The management side updating portion 56 determines whether to maintain or delete the registration of an alias in the specific information based on the number of times that the alias in the specific information was recognized. If the central management apparatus 50 determines that the alias of the specific information is to be deleted, the central management apparatus 50 transmits information indicating deletion of the alias of the specific information to the delivery processing apparatus 20A. The information indicating deletion of the alias of the specific information includes, for example, the alias of the specific information to be deleted, and the official name in the specific information associated with this alias of the specific information. The delivery processing apparatus 20A deletes the alias of the specific information from the memory 34 based on the transmitted information. The information indicating deletion may be transmitted to all delivery processing apparatuses 20A, or may be transmitted to a predetermined delivery processing apparatus 20A.

Specifically, for example, if the number of times that an alias in the specific information was recognized is smaller than or equal to a threshold value Th in all of the plurality of delivery processing apparatuses 20A, the management side updating portion 56 deletes the registration of this alias in the specific information. To delete means to cause the delivery processing apparatuses 20A to delete the alias in the specific information.

Also, for example, if the number of times that an alias in the specific information was recognized exceeds the threshold value Th in a predetermined number of (e.g. one) delivery processing apparatuses 20A among the plurality of delivery processing apparatuses 20A, the management side updating portion 56 may maintain the registration of this alias in the specific information.

If the number of times that an alias in the specific information was recognized is smaller than or equal to the threshold value Th in a certain delivery processing apparatus 20A (e.g. delivery processing apparatus 20A-2), the management side updating portion 56 may delete the registration of the alias in the specific information in the certain delivery processing apparatus 20A (e.g. delivery processing apparatus 20A-2).

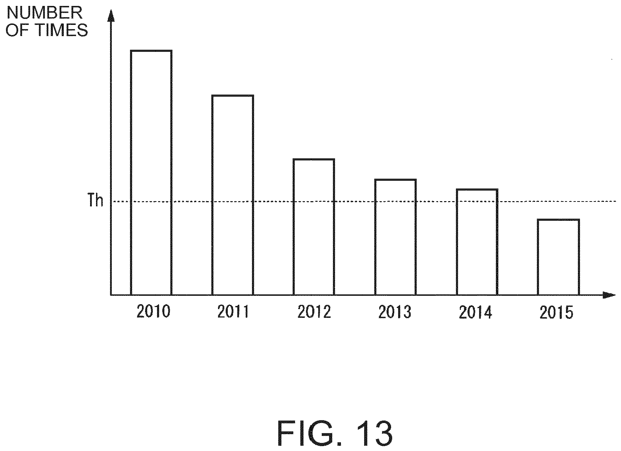

FIG. 13 is a diagram showing another exemplary image that the central management apparatus 50 causes the management side display 58 to display. The shown example indicates the number of times that certain specific information was recognized every year (e.g. from year 2010 to year 2015) by the delivery processing apparatus 20A. This number of times of recognition is the total of the number of times that the specific information was recognized by the delivery processing apparatus 20A-1 and the number of times that the specific information was recognized by the delivery processing apparatus 20A-2. Note that the number of times of recognition may be the average value of the numbers of times of recognition obtained from the delivery processing apparatus 20A-1 and the delivery processing apparatus 20A-2, or the result of statistically processing these numbers of times of recognition. For example, if the total of the numbers of times that an alias in the specific information was recognized is smaller than or equal to the threshold value Th in the delivery processing apparatuses 20A, the management side updating portion 56 deletes the registration of this alias in the specific information.

According to the above-described third embodiment, the management side updating portion 56 in the central management apparatus 50 determines whether to delete the registration of an alias in the specific information based on the numbers of times that the alias in the specific information was recognized or the frequencies of appearance thereof acquired from a plurality of delivery processing apparatuses 20A. Thus, a processing load on the delivery processing apparatuses 20A can be reduced.

### Fourth Embodiment

The fourth embodiment will now be described below. A delivery processing system 1B according to the fourth embodiment includes a video coding disk system (VCS) 100 in addition to the functional configuration of the delivery processing system 1 according to the first embodiment. A delivery processing apparatus 20B according to the fourth embodiment determines whether to maintain the registration of an alias in the specific information based on the result of processing performed by the VCS 100. The following description will focus on differences from the first embodiment.

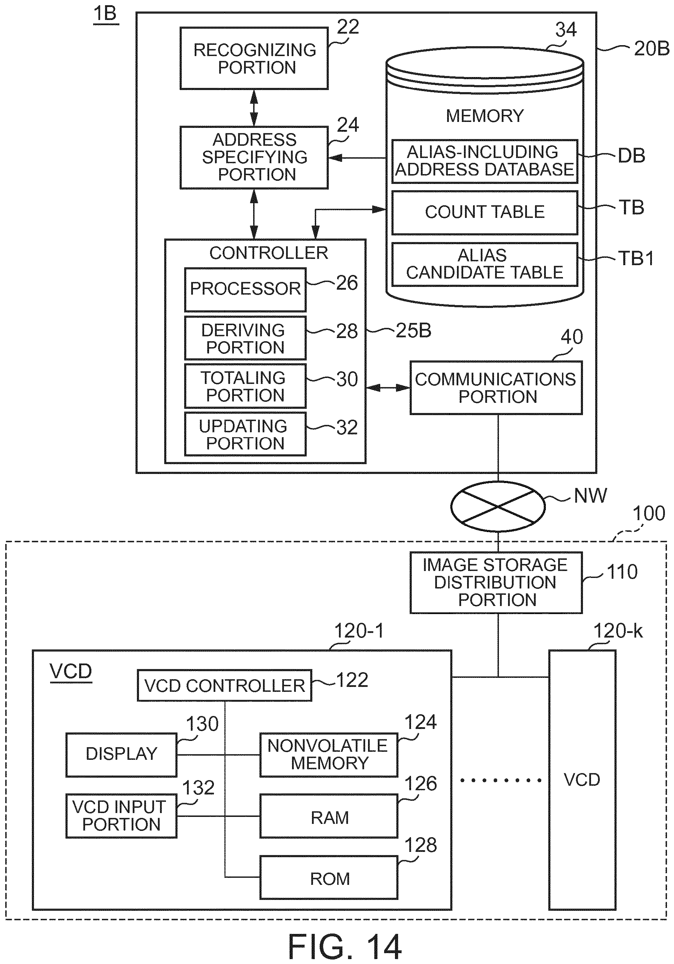

FIG. 14 is a diagram showing a functional configuration of the delivery processing system 1B according to the fourth embodiment. The delivery processing system 1B includes the delivery processing apparatus 20B and the VCS 100. The delivery processing apparatus 20B also includes a communications portion 40 in addition to the functional configuration of the delivery processing apparatus 20 according to the first embodiment. An alias candidate table TB1 is stored in the memory 34. The details of the alias candidate table TB1 will be described later. Note that the count table TB may be omitted in the memory 34 in the delivery processing apparatus 20 according to the fourth embodiment.

The VCS 100 includes an image storage distribution portion 110, and video coding disks (hereinafter referred to as "VCDs") 120-1 to 120-k (k is a natural number). In the following description, the VCD 120-1 to the VCD 120-k will be simply referred to as the VCD 120 in the case of not specially distinguishing among these VCDs.

The delivery processing apparatus 20B communicates with the VCDs 120 via the network NW. The image storage distribution portion 110 receives information that is output from the delivery processing apparatus 20B, the information being for video coding and including an image of a delivery object P (coding data). The coding data output from the delivery processing apparatus 20B is output to the VCS 100 if address information cannot be specified by the delivery processing apparatus 20B. For example, if address information cannot be specified, the delivery processing apparatus 20B outputs predetermined coding data to the VCS based on preset specifications. The coding data may include only an image of the delivery object P, or may include information recognized by the OCR portion 22. The following description will assume that the coding data includes an image of the delivery object P and the recognition result obtained by the OCR portion 22.

The image storage distribution portion 110 monitors operation status of the VCD 120, and distributes the coding data to the VCD 120 in accordance with the operation status of the VCD 120.

The VCD 120 includes a VCD controller 122, a nonvolatile memory 124, a RAM 126, a ROM 128, a display 130, and a VCD input portion 132. The VCD 120 causes the display 130 to dispaly address information that cannot be specified by the delivery processing apparatus 20B, and prompts the user to input address information (postal code and/or character information).

The VCD controller 122 is a processor such as a CPU, for example. The VCD controller 122 controls respective portions to perform various kinds of processing based on a control program and information stored in the nonvolatile memory 124 or the ROM 128. Control data and various other data are stored in the nonvolatile memory 124 in accordance with the management purpose of the VCD 120. The coding data that is output from the image storage distribution portion 110 is saved in the nonvolatile memory 124, for example. The input information that is input to the VCD input portion 132 by the user is saved in the nonvolatile memory 124, for example.

Data processed by the VCD controller 122 is temporarily saved in the RAM 126. A control program and control data for controlling each processing in the VCD 120 are stored in advance in the ROM 128. The display 130 displays the coding data output from the image storage distribution portion 110, for example. The display 130 may also display the address information recognized by the delivery processing apparatus 20B, for example. The VCD input portion 132 is a device with which the user inputs input information such as a postal code and character information that serve as the address information included in the image displayed on the display 130. The input information input by the VCD input portion 132 is transmitted, via the image storage distribution portion 110, to the delivery processing apparatus 20 together with identification information that is associated with the delivery object P. The identification information associated with the delivery object P is identification information that is provided when the delivery object P is processed by the delivery processing apparatus 20B.

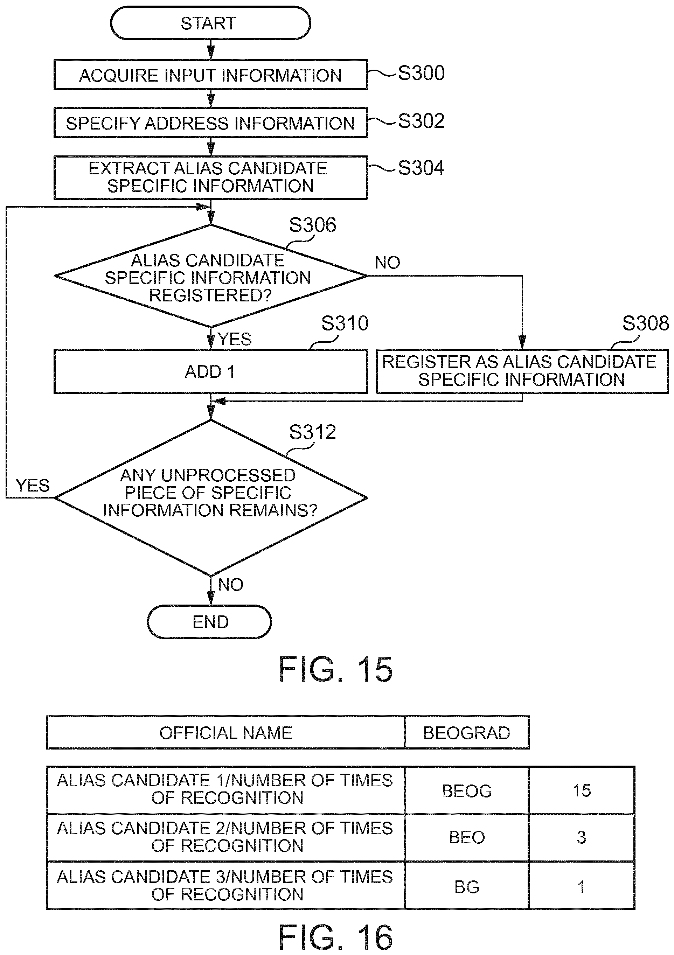

FIG. 15 is a flowchart showing a flow of processing executed by the delivery processing apparatus 20B. Initially, the delivery processing apparatus 20B acquires the input information from the VCD 100 (step S300). Next, the address specifying portion 24 searches the alias-including address database DB and specifies address information based on the acquired input information (step S302). For example, if a postal code is acquired as the input information, the address specifying portion 24 recognizes specific information that can be specified based on this postal code, and specifies the address information based on the recognized specific information and the result of processing performed by the OCR portion 22. Thus, the address specifying portion 24 can specify the address information regarding the delivery object P that could not be specified using the result of processing performed by the OCR portion 22.

Here, the address information of the delivery object P that could not be specified using the result of processing performed by the OCR portion 22 refers to, for example, address information (hereinafter referred to as "alias candidate specific information") that includes specific information that is not associated with any official name of the specific information in the alias-including database.

Next, the address specifying portion 24 extracts the alias candidate specific information (step S304). For example, the address specifying portion 24 segments information included in the address information recognized through OCR processing, and recognizes a plurality of pieces of specific information. The address specifying portion 24 extracts specific information that is different from an official name of the specific information in the address information and an alias of the specific information associated with the official name of the specific information of the alias-including address database DB. The address specifying portion 24 extracts specific information by comparing the specific information in the address information in the alias-including address database DB with the specific information obtained through segmentation.

Next, the address specifying portion 24 determines whether the extracted specific information has been registered as alias candidate specific information in the alias candidate table TB1, which will be described later (step S306). If the extracted specific information has not been registered as the alias candidate specific information, the address specifying portion 24 registers the extracted specific information as the alias candidate specific information to the alias candidate table TB1 in the memory 34 (step S308). If the extracted specific information has been registered as the alias candidate specific information, the deriving portion 28 in the controller 25 adds 1 to the count value associated with the alias candidate specific information registered in the alias candidate table TB1 (step S310).

FIG. 16 is a diagram showing an example of the alias candidate table TB1. In the alias candidate table TB1, an official name of the specific information is associated with alias candidate specific information. Also, in the alias candidate table TB1, the number of times that alias candidate specific information was recognized is associated with this alias candidate specific information. For example, "SERBIA BEOGRAD XXX-STREET 123" is the official name of the address information. However, if "BEOG", "BEO", "BG", or the like is written instead of "BEOGRAD", which is specific information, the address specifying portion 24 registers the written specific information as the alias candidate specific information to the alias candidate table TB1.

Next, the deriving portion 28 determines whether or not any unprocessed piece of specific information (that has not been subjected to the processing in step S306) remains (step S312). Unprocessed pieces of specific information do not include specific information that is included in the alias-including address database DB and matches specific information in specified address information. If any unprocessed piece of specific information remains, the processing returns to step S306. If no unprocessed piece of specific information remains, the processing of this flowchart ends.

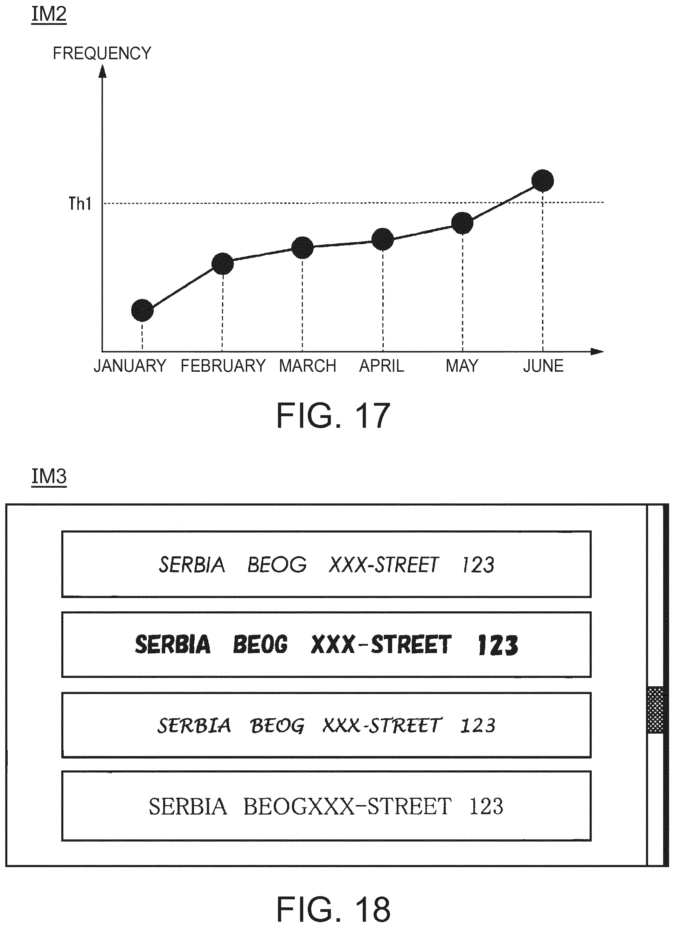

FIG. 17 is a diagram showing an exemplary image IM2 indicating the result of processing performed by the totaling portion 30. The totaling portion 30 derives the number of times that predetermined alias candidate specific information was recognized in a predetermined period. The shown example indicates the number of times that the specific information "BEOG" was recognized every month (e.g. from January to June), the number of times having been totaled by the totaling portion 30. The updating portion 32 determines whether to recognize the alias candidate specific information as an alias in the specific information based on the totaling result obtained by the totaling portion 30. For example, if the number of times that the alias candidate specific information recognized by the address specifying portion 24 was recognized exceeds a predetermined threshold value Th1, the updating portion 32 registers this alias candidate specific information as an alias in the specific information.

FIG. 18 is a diagram showing an exemplary image IM3 that is displayed on the display 8. For example, an area that includes information indicating the result of OCR processing performed on the alias candidate specific information may be displayed on the display 8. Determination as to whether to register the alias candidate specific information as an alias in the specific information to the alias-including address database DB may be executed by the operator. For example, in the case of registering the alias candidate specific information as a result of referencing the image IM3 displayed on the display 8, the operator performs a predetermined operation to the operating portion 6. In accordance with the predetermined operation, the updating portion 32 registers the alias candidate specific information as an alias in the specific information.

According to the above-described fourth embodiment, the updating portion 32 determines whether to register alias candidate specific information as an alias in the specific information based on the number of times that the alias candidate specific information was recognized or the frequency of appearance thereof. Thus, it is possible to increase the percentage that the address information written on delivery objects P can be specified.

### Fifth Embodiment

The fifth embodiment will now be described below. In the fifth embodiment, the third embodiment and the fourth embodiment are integrally implemented.

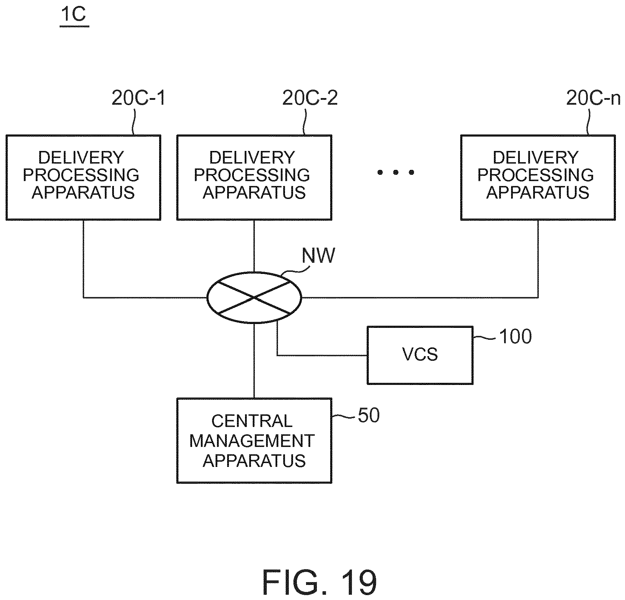

FIG. 19 is a diagram showing a configuration of a delivery processing system 1C according to the fifth embodiment. The delivery processing system 1C includes delivery processing apparatuses 20C-1 to 20C-n (n is a natural number), the central management apparatus 50, and the VCS 100. In the following description, in the case of not distinguishing among the delivery processing apparatuses 20C-1 to 20C-n, these delivery processing apparatuses will be simply referred to as a delivery processing apparatus 20C.

The delivery processing apparatus 20C has functions equivalent to those of the delivery processing apparatus 20A according to the third embodiment. The central management apparatus 50 has functions equivalent to those of the central management apparatus 50 according to the third embodiment. Note that the management side updating portion 56 in the central management apparatus 50 according to this embodiment may include the function of the updating portion 32 according to the fourth embodiment, i.e. the function of registering alias candidate specific information as an alias in the specific information. The VCS 100 has functions equivalent to those of the VCS 100 according to the fourth embodiment. Note that the number of VCSes 100 is not limited to one but may be more than one.

At least one embodiment described above provides: a recognizing portion configured to recognize address information including a plurality of pieces of specific information provided on a delivery object based on an image photographed by a photography portion for photographing a delivery object; an address specifying portion configured to use the address information recognized by the recognizing portion to search an address database in which an address information list is registered, the address database including information associating official names of the specific information and aliases of the specific information, and to specify the address information provided on the delivery object based on information obtained through the search; a deriving portion configured to derive a frequency of appearance of the aliases based on specifying results obtained by the address specifying portion; and an updating portion configured to update information associating the official names in the specific information with the aliases of the address database based on the frequency of appearance of the alias derived by the deriving portion. As a result, the number of pieces of address information can be managed so as to be within an appropriate range.

The above-described embodiments can be expressed as follows.

An address information management apparatus includes: a recognizing portion configured to recognize address information including a plurality of pieces of specific information provided on a delivery object, and the plurality of pieces of specific information, the address information and the plurality of pieces of specific information being displayed in an area including the address information and the plurality of pieces of specific information, based on information obtained by performing OCR processing on an image obtained by a photography portion for photographing the delivery object; an address specifying portion configured to use the address information recognized by the recognizing portion to search an address database in which an address information list is registered, the address database including information associating official names of the specific information with aliases, acquire address information that is obtained through the search and matches the address information recognized by the recognizing portion, and to specify the address information provided on the delivery object as the acquired address information; a deriving portion configured to, if the address information has been specified by the address specifying portion, determine whether the specific information included in the address information recognized by the recognizing portion matches the alias corresponding to the official name of the specific information included in the acquired address information, and derive the number of times that it was determined that the specific information included in the recognized address information matches the alias; and an updating portion configured to, if the number of times that the specific information included in the recognized address information matches the alias derived by the deriving portion is smaller than or equal to a predetermined number of times, delete registration of the specific information of the alias registered in association with the official name in the specific information in the address database.

The above-described embodiments can be expressed as follows. An address information management system includes: a first apparatus including: a recognizing portion configured to recognize address information including a plurality of pieces of specific information provided on a delivery object, and the plurality of pieces of specific information, the address information and the plurality of pieces of specific information being displayed in an area including the address information and the plurality of pieces of specific information, based on information obtained by performing OCR processing on an image obtained by a photography portion for photographing the delivery object; an address specifying portion configured to use the address information recognized by the recognizing portion to search an address database that is an address information list in which an official information of the specific information is associated with an alias of the specific information of the specific information, acquire address information that is obtained through the search and matches the address information recognized by the recognizing portion, and specify the address information provided on the delivery object as the acquired address information; a deriving portion configured to, if the address information has been specified by the address specifying portion, determine whether the specific information included in the address information recognized by the recognizing portion matches the alias corresponding to the official name of the specific information included in the acquired address information, and derive the number of times that it was determined that the specific information included in the recognized address information matches the alias; and a first communications portion configured to communicate with another apparatus, the first communications portion transmitting, to the other apparatus, information including the number of times of matching derived by the deriving portion; and a second apparatus including: an updating portion configured to update association between the official name of the specific information and the alias of the specific information in the address database based on content of an update of the association between the official name of the specific information and the alias of the specific information in the address database acquired by the first communications portion; a second communications portion configured to communicate with the first apparatus, the second communications portion receiving information including the number of times of matching transmitted from the first apparatus, and transmitting the content of the update of the association between the official name of the specific information and the alias of the specific information in the address database; and a update determining portion configured to determine the content of the update of the association between the official name of the specific information and the alias of the specific information in the address database based on the information including the number of times of matching received by the second communications portion.

Although some embodiments of the present invention have been described above, these embodiments are presented as examples and are not intended to limit the scope of the invention. The embodiments may be carried out in various other modes, and may be omitted, replaced, or modified in various ways without departing from the gist of the invention. The embodiments and modifications thereof are encompassed in the scope and gist of the invention, as well as in the invention described in the claims and equivalents thereof.

## Claims

1. An address information management system comprising:
a recognizing portion (22) configured to recognize address information including a plurality of pieces of specific information provided on a delivery object (P), based on an image obtained by a photography portion (14) for photographing the delivery object (P);
an address specifying portion (24) configured to use the address information recognized by the recognizing portion (22) to search an address database (DB) in which an address information list is registered, the address database including information associating official names of the specific information with aliases of the specific information, and to specify the address information provided on the delivery object (P) based on information obtained through the search;
a deriving portion (28) configured to derive the number of times that the aliases appeared or a frequency of appearance of the aliases based on specifying results obtained by the address specifying portion (24); and
an updating portion (32) configured to update the information associating the official names of the specific information with the aliases in the address database (DB) based on the number of times that the aliases appeared or the frequency of appearance thereof derived by the deriving portion (28).

2. The system according to claim 1,
wherein the updating portion (32) is configured to execute, as the updating, deletion of an alias of the specific information associated with an official name of the specific information registered in the address database (DB), based on the number of times that this alias appeared or the frequency of appearance thereof derived by the deriving portion (28).

3. The system according to claim 2,
wherein the updating portion (32) is configured to perform the deletion if the number of times that the alias appeared or the frequency of appearance of the alias derived by the deriving portion (28) is smaller than or equal to a threshold value.

4. The system according to any one of claims 1 to 3, further comprising^{:}
a display (8) configured to display information including the number of times that the aliases appeared or the frequency of appearance of the aliases derived by the derivation unit (28).

5. The system according to any one of claims 1 to 4, further comprising:
a totaling portion (30) configured to total, every predetermined period, the number of times that the aliases appeared or the frequency of appearance of the aliases derived by the derivation unit (28).

6. The system according to claim 5,
wherein the updating portion (32) is configured to update the information associating the official names of the specific information with the aliases of the address database (DB), based on the number of times that the aliases appeared or the frequency of appearance of the aliases in each predetermined period totaled by the totaling portion (30).

7. The system according to claim 5 or 6, further comprising:
a display (8) configured to display information including a totaling result obtained by the totaling portion (30).

8. The system according to any one of claims 1 to 7, further comprising:
an accepting portion (6) configured to accept, through a user operation, an updating instruction to update the information associating the official names in the specific information with the aliases in the address database (DB),
wherein the updating portion (32) is configured to perform the updating based on the updating instruction accepted by the accepting portion (6).

9. The system according to any one of claims 1 to 8,
wherein the deriving portion (28) is configured to derive the number of times that alias candidate specific information that is different from the official names and the aliases appeared or a frequency of appearance of this alias candidate specific information based on the specification results obtained by the address specifying portion (24), and the updating portion (32) is configured to associate the alias candidate specific information with the information associating the official names in the specific information with the aliases in the address database (DB) based on the number of times that the alias candidate specific information appeared or the frequency of appearance of the alias candidate specific information derived by the deriving portion (28).

10. An address information management system comprising:
a first apparatus (1A) comprising:
a recognizing portion (22) configured to recognize address information including a plurality of pieces of specific information provided on a delivery object (P), based on an image obtained by a photography portion (14) for photographing the delivery object (P);
an address specifying portion (24) configured to use the address information recognized by the recognizing portion (22) to search an address database (DB) in which an address information list is registered, the address database (DB) including information associating official names of the specific information with the aliases of the specific information, and to specify the address information provided on the delivery object (P) based on information obtained through the search;
a deriving portion (28) configured to derive the number of times that the aliases appeared or a frequency of appearance of the aliases based on specifying results obtained by the address specifying portion (24); and
a first communications portion (40) configured to communicate with another apparatus and to transmit, to the other apparatus, information including the number of times that the aliases appeared or the frequency of appearance of the aliases derived by the deriving portion (28), and
a second apparatus (50) comprising:
a second communications portion (52) configured to receive information including the number of times that the aliases appeared or the frequency of appearance of the aliases transmitted from the first apparatus (1A); and
an update determining portion (56) configured to determine content of an update of the information associating the official names of the specific information with the aliases of the specific information in the address database (DB), based on the information including the number of times that the aliases appeared or the frequency of appearance of the aliases received by the second communications portion (52).

11. The system according to claim 10,
wherein the second communications portion (52) is configured to transmit, to the first apparatus (1A), the content of an update determined by the update determining portion (56), the first communications portion (40) is configured to receive the content of an update determined by the update determining portion (56) and transmitted by the second communications portion (52), and the first apparatus (1A) further comprises an updating portion (32) configured to update the information associating the official names of the specific information with the aliases of the specific information in the address database (DB) based on the content of an update received by the first communications portion (40).

12. The system according to claim 10 or 11, comprising a plurality of the first apparatuses (1A),
wherein the update determining portion (56) in the second apparatus (50) is configured to determine the content of an update of the information associating the official names of the specific information with the aliases of the specific information in the address database (DB) based on the information including the number of times that the aliases appeared or the frequency of appearance of the aliases transmitted by the first communications portion (40) in the plurality of first apparatuses (1A).

13. An address information management program that causes a computer to:
recognize address information including a plurality of pieces of specific information provided on a delivery object (P), based on an image obtained by a photography portion (14) for photographing the delivery object (P);
use the recognized address information to search an address database (DB) in which an address information list is registered, the address database (DB) including information associating official names of the specific information with aliases of the specific information, and to specify the address information provided on the delivery object (P) based on information obtained through the search;
derive the number of times that the aliases appeared or a frequency of appearance of the aliases based on a result of the specifying; and
update the information associating the official names of the specific information with the aliases of the specific information in the address database (DB), based on the derived number of times that the aliases appeared or the derived frequency of appearance of the aliases.

14. An address information management program that causes a computer to:
acquire information including the number of times that an alias of the specific information included in address information including a plurality of pieces of specific information provided on a delivery object (P) appeared, or a frequency of appearance of the alias; and
determine, based on the acquired information including the number of times that the alias of the specific information appeared or the frequency of appearance of the alias, content of an update of information associating official names of the specific information with in the aliases in an address database (DB) in which an address information list is registered, the address database (DB) including the information associating the official names of the specific information with the aliases.
